# EUROPEAN PATENT APPLICATION

(11) **EP 4 328 745 A1**
(43) Date of publication of application: **28.02.2024**
(21) Application number: 23184409.3
(22) Date of filing: 10.07.2023
(51) Int. Cl.: G06F 9/445, G05B 19/042, G05B 19/05, G06F 8/36

(54) **SYSTEM AND METHODS THAT FACILITATE ADD-ON FUNCTIONS FOR EMPLOYMENT WITHIN AN INDUSTRIAL DEVICE**

(30) Priority: 26.08.2022 US 202217897024
(71) Applicant: Rockwell Automation Technologies, Inc., Mayfield Heights, OH 44124 (US)
(72) Inventor: Leng, ZaiQiang, MAYFIELD HEIGHTS, OH, 44124 (US); Viste, Michael J., MAYFIELD HEIGHTS, OH, 44124 (US)
(74) Representative: Grünecker Patent- und Rechtsanwälte PartG mbB

(57) **Abstract**

Systems and methods for facilitating add-on functions for employment with an industrial device. One system includes an electronic processor configured to detect an add-on function call from a user program executing within the industrial device. The electronic processor is also configured to determine a function name of an add-on function associated with the add-on function call. The electronic processor is also configured to provide a set of operations for executing the add-on function, based at least in part on the function name of the add-on function.

## Description

### CROSS-REFERENCE TO RELATED APPLICATIONS

Not applicable.

### BACKGROUND INFORMATION

Industrial controllers are special purpose processing devices used for controlling (e.g., automated and semi-automated) industrial processes, machines, manufacturing equipment, plants, and the like. A typical controller executes a control program or routine in order to measure one or more process variables or inputs representative of the status of a controlled process and/or effectuate outputs associated with control of the process. Such inputs and outputs can be binary, (e.g., "1" or "0," "on" or "off," etc.), and/or analog, assuming a continuous range of values. A typical control routine can be created in a controller configuration environment that has various tools and interfaces whereby a developer can construct and implement a control strategy using industrial and conventional programming languages or graphical representations of control functionality. Such control routine can be downloaded from the configuration system into one or more controllers for implementation of the control strategy in controlling a process or machine.

Measured inputs received from a controlled process and outputs transmitted to the process can pass through one or more input/output (I/O) modules in a control system. Such modules can serve in the capacity of an electrical interface between the controller and the controlled process and can be located local or remote from the controller. Inputs and outputs can be recorded in an I/O memory. The input values can be asynchronously or synchronously read from the controlled process by one or more input modules and output values can be written directly to memory by a processor for subsequent communication to the process by specialized communications circuitry. An output module can interface directly with a controlled process by providing an output from memory to an actuator such as a motor, drive, valve, solenoid, and the like.

During execution of the control routine, values of the inputs and outputs exchanged with the controlled process can pass through memory. The values of inputs in memory can be asynchronously or synchronously updated from the controlled process by dedicated and/or common scanning circuitry. Such scanning circuitry can communicate with input and/or output modules over a bus on a backplane or network. The scanning circuitry can also asynchronously or synchronously write values of the outputs in memory to the controlled process. The output values from the memory can be communicated to one or more output modules for interfacing with the process. Thus, a controller processor can simply access the memory rather than needing to communicate directly with the controlled process.

In distributed control systems, controller hardware configuration can be facilitated by separating the industrial controller into a number of control elements, each of which performs a different function. Particular control modules needed for the control task can then be connected together on a common backplane within a rack and/or through a network or other communications medium. The control modules can include processors, power supplies, network communication modules, and I/O modules exchanging input and output signals directly with the controlled process. Data can be exchanged between modules using a backplane communications bus, which can be serial or parallel, or via a network. In addition to performing I/O operations based solely on network communications, smart modules exist which can execute autonomous logical or other control programs or routines. Various control modules of a distributed industrial control system can be spatially distributed along a common communication link in several locations. Certain I/O modules can thus be located proximate a portion of the controlled equipment, and away from the controller. Data can be communicated with these remote modules over a common communication link, or network, wherein all modules on the network communicate via a standard communications protocol.

In a typical distributed control system, one or more I/O modules are provided for interfacing with a process. The outputs derive their control or output values in the form of a message from a master or peer device over a network or a backplane. For example, an output module can receive an output value from a processor via a communications network or a backplane communications bus. The desired output value is generally sent to the output module in a message. The output module receiving such a message will provide a corresponding output (analog or digital) to the controlled process. Input modules measure a value of a process variable and report the input values to another device over a network or backplane. The input values can be used by a processor for performing control computations.

As noted above, a controller can execute routines to control machines, processes, manufacturing equipment, plants, and the like, and such routines can be created in a controller configuration environment and downloaded to the controller for execution. In many instances, an end-user tailors code for a particular controller in order to control a specific machine, process, equipment, plant, etc. in a desired manner. Add-on instructions is one example of a conventional approach for tailoring code for a particular controller. For example, within this code, the end-user can make one or more calls to one or more add-on instructions. Such add-on instructions, in general, respectively include and relate a set of re-usable routines, data parameters, and/or state data. However, such add-on instructions, in general, do not enable an end-user to integrate with open system libraries, such as, e.g., libraries written in C/C++ using the GNU compiler collection ("GCC"). These libraries can contain generally useful functions, such as in a runtime library from a toolchain vendor or application specific functions from an application associated with the industrial controller. As one non-limiting example, where the industrial device is a Logix5000 Controller from Rockwell Automation, Inc. of Milwaukee, Wis., an end-user of the Logix5000 Controller cannot integrate with an open system library from a Logix application associated with the Logix5000 Controller. Additionally, while conventional approaches enable an end-user to tailor code for a particular controller, the process of implementing such conventional approaches is generally an extensive and disruptive process. This inability to integrate with open systems and the extensive implementation process are significant shortcomings with conventional systems.

### SUMMARY

The following presents a simplified summary of the disclosed technology herein in order to provide a basic understanding of some aspects of the di sclosed technology. This summary is not an extensive overview of the disclosed technology. It is intended neither to identify key or critical elements of the disclosed technology nor to delineate the scope of the disclosed technology. Its sole purpose is to present some concepts of the disclosed technology in a simplified form as a prelude to the more detailed description that is presented later.

The subject matter disclosed within relates generally to industrial control systems and, more particularly, to systems and methods that create and manage add-on functions that are called by programs executing within industrial devices. In particular, the subject matter disclosed herein provides systems and methods that facilitate re-use of logic encapsulated in an add-on function(s) that are called by a program(s) executing within an industrial device. Such add-on functions can be generated through a control ler configuration environment to include and relate a function name, one or more parameters, and/or a return type and can be protected by various known security techniques to mitigate unauthorized access. A user may define source logic for the add-on function to execute or the source logic can be used to link to a function with the same signature in a library that exists in the controller.

One embodiment provides a system for facilitating add-on functions for employment with an industrial device. The system includes an electronic processor configured to detect an add-on function call from a user program executing within the industrial device. The electronic processor is also configured to determine a function name of an add-on function associated with the add-on function call. The electronic processor is also configured to provide a set of operations for executing the add-on function, based at least in part on the function name of the add-on function.

Another embodiment provides a method for facilitating add-on functions for employment with an industrial device. The method includes detecting, with an electronic processor, an add-on function call from a user program executing within the industrial device. The method also includes determining, with the electronic processor, a function name of an add-on function associated with the add-on function call. The method also includes providing, with the electronic processor, a set of operations for executing the add-on function, based at least in part on the function name of the add-on function.

Yet another embodiment provides a non-transitory computer-readable medium storing instructions that, when executed by an electronic processor, perform a set of functions. The set of functions includes detecting an add-on function call from a user program executing within the industrial device. The set of functions also includes determining a function name of an add-on function associated with the add-on function call. The set of functions also includes providing a set of operations for executing the add-on function, based at least in part on the function name of the add-on function.

The foregoing and other aspects and advantages of the present disclosure will appear from the following description. In the description, reference is made to the accompanying drawings which form a part hereof, and in which there is shown by way of illustrations one or more embodiments of the present disclosure. Such embodiments do not necessarily represent the full scope of the present disclosure, however, and reference is made therefore to the claims and herein for interpreting the scope of the present disclosure.

### BRIEF DESCRIPTION OF DRAWINGS

The present disclosure will be better understood and features, aspects and advantages other than those set forth above will become apparent when consideration is given to the following detailed description thereof. Such detailed description makes reference to the following drawings.
FIG. 1 schematically illustrates an example object creation per instance of an add-on instruction in accordance with some embodiments.
FIG. 2 illustrates the add-on instruction of FIG. 1 having a single entry point function according to some embodiments.
FIG. 3 schematically illustrates a system for facilitating add-on functions according to some embodiments.
FIG. 4 schematically illustrates a user device included in the system of FIG. 3 according to some embodiments.
FIG. 5 schematically illustrates an industrial device included in the system of FIG. 3 according to some embodiments.
FIG. 6 an example diagram of facilitating generation of an add-on function according to some embodiments.
FIG. 7 is a flowchart illustrating a method for facilitating add-on functions using the system of FIG. 3 according to some embodiments.
FIG. 8 illustrates an example implementation of an add-on function according to some embodiments.
FIG. 9 is a table describing the add-on function of FIG. 8 according to some embodiments.

### DETAILED DESCRIPTION

As utilized herein, terms "component," "system," "controller," "device," "manager," and variants thereof are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components can reside within a process and/or thread of execution and a component can be localized on one computer and/or distributed between two or more computers.

The disclosed technology is described with reference to the drawings, wherein like reference numerals are used to refer to like elements throughout. In the following description, for purposes of explanation, numerous specific details are set forth in order to provide a thorough understanding of the disclosed technology. It may be evident, however, that the disclosed technology may be practiced without these specific details. In other instances, well-known structures and devices are shown in block diagram form in order to facilitate describing the disclosed technology.

Disclosed herein are systems and methods for creating and managing add-on functions, such as, e.g., user defined functions configured to (a) execute logic and/or (b) call a function in an available library. Accordingly, the subject matter disclosed herein generally relate to creating and managing add-on functions that are called by programs executing within industrial devices. In particular, the subject matter disclosed herein provides systems and methods that facilitate re-use of logic encapsulated in an add-on function(s) that are called by a program(s) executing within an industrial device. Such add-on functions can be generated through a controller configuration environment to include and relate a function name, one or more parameters, and/or a return type and can be protected by various known security techniques to mitigate unauthorized access. A user may define source logic for the add-on function to execute or may link to a function with the same signature in a library that exists in the controller.

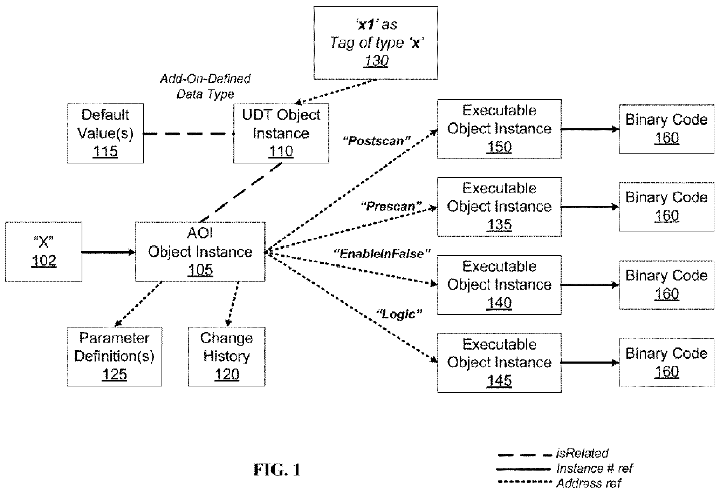

As noted above, the extensive implementation process can be a significant shortcoming of some conventional systems. For example, FIG. 1 schematically illustrates an example common industrial protocol ("CIP") (supported by Open DeviceNet Vendors Association ("ODVA")) object creation per instance of an add-on instruction ("AOI") in accordance with some embodiments. In the non-limiting example illustrated in FIG. 1, "X" (represented in FIG. 1 by reference numeral 102) is the name of the Add-On Instruction (definition) illustrated as "AOI object instance" (represented in FIG. 1 by reference numeral 105). Each AOI has an Add-On-Defined data type; also named "X" in this example (e.g., a "UDT object instance" represented by reference numeral 110 in FIG. 1). Each of these Add-On-Defined data types can specify its "Default Values" (represented in FIG. 1 by reference numeral 115). Each AOI also has Data Table objects for "Change History" and "Parameter Definitions" (represented in FIG. 1 by reference numerals 120 and 125, respectively).

In the non-limiting example of FIG. 1, "x1" is an AOI backing tag used for this invocation of X (represented in FIG. 1 by reference numeral 130). Every tag has a symbol and data table instance created for it and the AOI backing tag is no different. Data table instances are created based on the User Defined Template specified during its creation and immediately initialized with the default values provided it.

Each AOI (definition) has one or more executable object instances (e.g., one or more routines) assigned to it to be invoked during each of the four possible execution modes, as illustrated in FIG. 1. The execution modes includes, a "Prescan" mode, an "EnableInFalse" mode, a "Logic" mode (e.g., an "EnableInTrue" mode), and a "Postscan" mode (represented in FIG. 1 by reference numerals 135, 140, 145, and 150, respectively). Each executable object instance has one or more files that hold the binary code (represented in FIG. 1 by reference numeral 160) to be executed when the routine is invoked by its containing AOI. The source for each routine can be stored in a file system rather than memory.

Accordingly, as illustrated in FIG. 1, there are a significant number of objects needing instantiation in the controller to invoke a single AOI, which results, at least in part, in a complex and extensive implementation process.

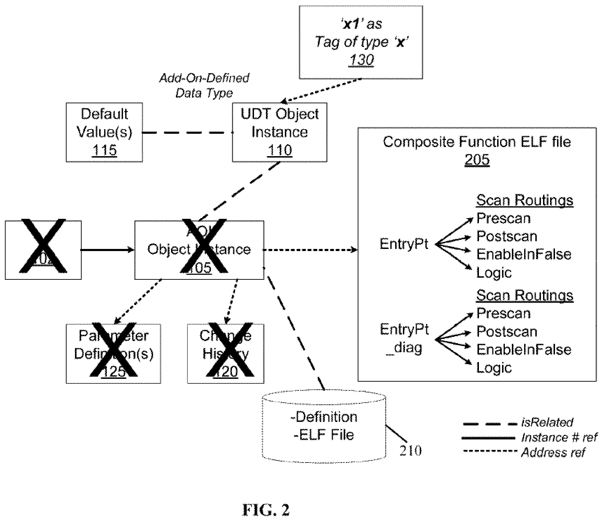

FIG. 2 illustrates the same AOI as in FIG. 1 except, in FIG. 2, it has a single entry point function (represented in FIG. 2 by reference numeral 205) that replaces the source logic contained in the four executable objects (e.g., reference numerals 135, 140, 145, and 150 of FIG. 1). This source-to-source translation is often called transpiling. This simpler approach needs less memory and executes faster. Safety AOI's require another entry point function for diagnostic behavior. As illustrated in FIG. 2, the entry point function is compiled into an FLF file. A user may download an executable and linkable format ("ELF") file individually and/or include the ELF file as part of a library (represented in FIG. 2 by reference numeral 210). When the corresponding binaries (e.g., the ELF file(s)) are downloaded before they are referenced, the linking operation will be successful. Since the function is called from user code, the AOI object instance and its collateral are no longer needed. Such implementations may be referred to as composite instructions.

Despite the improvements provided by composite instructions, there are still a number of shortcomings involved with conventional methods of tailoring code for a controller (e.g., an industrial device). For instance, conventional methods generally cannot call subroutines. As one example, AOIs are limited to calling other AOIs. Conventional methods also generally require a significant level of programming and support to create and employ, including, e.g., (a) specifying Input, Output, InOut, and local parameters, (b) source logic is programmed across different routines (e.g., up to four routines, one per scan mode), (c) initialization/default values, configuration data, some optional features, (d) backing tag creation with specific invocation usage, and (e) invocation stack with overflow protection and stack trace handling for faults, and the like. While conventional methods, such as with AOIs, align with user defined function blocks (e.g., IEC 61131-3 Table 40), add-on functions ("AOFs") would increase compliance by offering an end-user defined functions (e.g., IEC 61131-3 Table 19). Additionally, AOFs are (a) easier for end-users to define and invoke, (b) take less memory (e.g., fewer objects), and (c) execute faster (e.g., less indirection) than AOIs designed for the same purpose. AOFs do not retain state and can more easily be reused without initialization and persistence concerns. In some instances, an AOF may return a result. In other instances, an AOF may not return a result. Further, AOFs can be configured to (a) invoke functions developed outside of a device-specific application (e.g., an application associated with a specific industrial controller) (e.g., external AOFs) or (b) execute source logic as programmed locally.

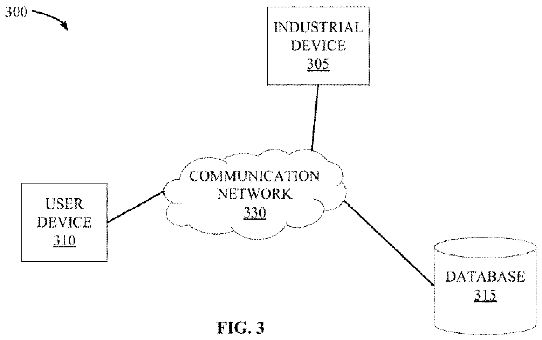

FIG. 3 schematically illustrates a system 300 for facilitating add-on functions according to some embodiments. In the illustrated example, the system 300 includes an industrial device 305, a user device 310, and a database 315. In some embodiments, the system 300 includes fewer, additional, or different components in different configurations than illustrated in FIG. 3. As one non-limiting example, the system 300 may include multiple industrial devices 305, multiple user devices 310, multiple databases 315, or a combination thereof. As another non-limiting example, one or more components of the system 300 may be combined into a single device, such as, e.g., the user device 310 and the database 315.

The industrial device 305, the user device 310, and the database 315 communicate over one or more wired or wireless communication networks 330. Portions of the communication networks 330 may be implemented using a wide area network, such as the Internet, a local area network, such as a BLUETOOTH^{®} or WI-FI^{®}, and combinations or derivatives thereof. Alternatively, or in addition, in some embodiments, components of the system 300 communicate directly as compared to through the communication network 330. Also, in some embodiments, the components of the system 300 can communicate through one or more intermediary devices not illustrated in FIG. 3.

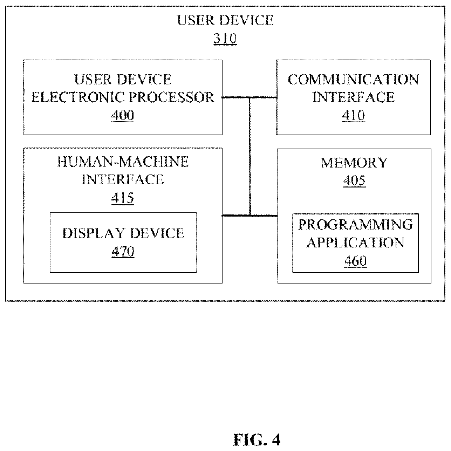

The user device 310 may be a computing device, such as a desktop computer, a laptop computer, a tablet computer, a terminal, a smart telephone, a smart television, a smart wearable, or another suitable computing device that interfaces with a user. As illustrated in FIG. 4, the user device 310 includes a user device electronic processor 400, a user device memory 405, a user device communication interface 410, and a human-machine interface ("HMI") 415. The user device electronic processor 400, the user device memory 405, the user device communication interface 410, and the HMI 415 communicate wirelessly, over one or more communication lines or buses, or a combination thereof. The user device 310 may include additional components than those illustrated in FIG. 4 in various configurations. The user device 310 may also perform additional functionality other than the functionality described herein Also, the functionality described herein as being performed by the user device 310 may be distributed among multiple devices (e.g., as part of a cloud service or cloud-computing environment), combined with another component of the system 300 (e.g., combined with the database 315, another component of the system 300, or the like), or a combination thereof.

The user device communication interface 410 may include a transceiver that communicates with the industrial device 305, the database 315, or a combination thereof over the communication network 330 and, optionally, one or more other communication networks or connections. In some embodiments, the user device communication interface 410 enables the user device 310 to communicate with the industrial device 305, the database 315, or a combination thereof over one or more wired or wireless connections. The user device electronic processor 400 includes a microprocessor, an application-specific integrated circuit ("ASIC"), or another suitable electronic device for processing data, and the user device memory 405 includes a non-transitory, computer-readable storage medium. The user device electronic processor 400 is configured to retrieve instructions and data from the user device memory 405 and execute the instructions.

As one non-limiting example, as illustrated in FIG. 4, the user device memory 405 includes a programing application 460 (referred to herein as "the application 460"). The application 460 is a software application executable by the user device electronic processor 400 in the example illustrated and as specifically discussed below, although a similarly purposed module can be implemented in other ways in other examples. The user device electronic processor 400 executes the application 460 to facilitate user programming for industrial devices, and more specifically, to facilitate the generation and implementation of an AOF for employment with a user program for execution on an industrial device (e.g., the industrial device 305).

As noted above, in some embodiments, the functionality (or a portion thereof) described herein as being performed by the user device 310 may be distributed among multiple devices (e.g., as part of a cloud service or cloud-computing environment). As one non-limiting example, in some embodiments, the system 300 includes a server (e.g., a computing device). The server may include similar components as the user device 310, such as an electronic processor (e.g., a microprocessor, an ASIC, or another suitable electronic device), a memory (e.g., a non-transitory, computer-readable storage medium), a communication interface, such as a transceiver, for communicating over the communication network 330 and, optionally, one or more additional communication networks or connections. Accordingly, in some embodiments, the server may store the application 460 as part of providing a programming service through the server. In such embodiments, to communicate with the server (e.g., interact with the application 460), the user device 310 may store a browser application or a dedicated software application executable by the user device electronic processor 400.

As described in greater detail herein, the application 460 may facilitate generation of an add-on function (e.g., a custom or user-defined add-on function), implementation (or invocation) of an add-on function (e.g., a standard add-on function, a custom or user-defined add-on function, or a combination thereof), or a combination thereof. As one non-limiting example, a user may interact with the application 460 to generate one or more add-on functions (e.g., a list of functions). The one or more add-on functions may be invoked by one or more user programs. As one non-limiting example, a first user may generate and store an add-on function and a second user may access the add-on function for implementation in a user program of the second user. Alternatively or in addition, a user may interact with the application 460 to implement (or invoke) one or more add-on functions in a user program associated with the user. As one non-limiting example, a first user may code a routine for use in a user program, where the routine calls an add-on function.

As noted above, the user device 310 may also include the HMI 415 for interacting with a user. The HMI 415 may include one or more input devices, one or more output devices, or a combination thereof. Accordingly, in some configurations, the HMI 415 allows a user to interact with (e.g., provide input to and receive output from) the user device 310. For example, the HMI 415 may include a keyboard, a cursor-control device (e.g., a mouse), a touch screen, a scroll ball, a mechanical button, a display device (e.g., a liquid crystal display ("LCD")), a printer, a speaker, a microphone, or a combination thereof. As illustrated in FIG. 4, in some embodiments, the HMI 415 includes a display device 470. The display device 470 may be included in the same housing as the user device 310 or may communicate with the user device 310 over one or more wired or wireless connections. For example, in some configurations, the display device 415 is a touchscreen included in a laptop computer or a tablet computer. In other configurations, the display device 415 is a monitor, a television, or a projector coupled to a terminal, desktop computer, or the like via one or more cables.

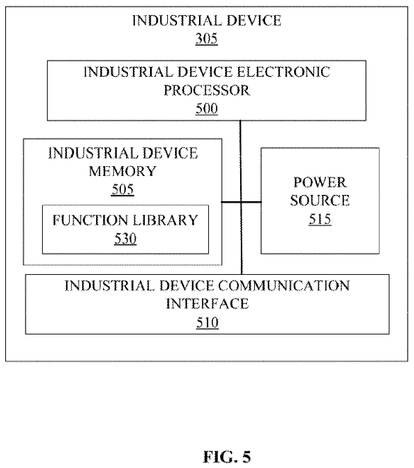

FIG. 5 illustrates an example industrial device (e.g., the industrial device 305) in accordance with some embodiments The industrial device 305 can be an industrial controller, a programmable logic controller ("PLC"), and the like. In the illustrated example, the industrial device 305 includes an industrial device electronic processor 500, an industrial device memory 505, an industrial device communication interface 510, and a power source 515. The industrial device electronic processor 500, the industrial device memory 505, the industrial device communication interface 510, and the power source 515 communicate over one or more communication lines or buses. The industrial device 305 may include additional components than those illustrated in FIG. 5 in various configurations. The industrial device 305 may also perform additional functionality other than the functionality described herein.

In some embodiments, the industrial device communication interface 510 enables the industrial device 305 to communicate with the user device 305, the database 315, or a combination thereof over one or more wired or wireless connections. The industrial device electronic processor 500 includes a microprocessor, an ASIC, or another suitable electronic device for processing data, and the industrial device memory 505 includes a non-transitory, computer-readable storage medium. The industrial device electronic processor 500 is configured to retrieve instructions and data from the industrial device memory 505 and execute the instructions.

As described in greater detail herein, in some embodiments, the industrial device electronic processor 500 executes end-user programs and associated add-on functions, which may be stored within a function library 530 of the industrial device memory 505. Alternatively or in addition, the function library 530 may be stored external to the industrial device 305 (as described in greater detail herein with respect to the database 315). The industrial device communication interface 510 enables communication. As one non-limiting example, the industrial device communication interface 510 may include an input channel that can be employed to receive analog and digital signals through sensors, switches, and the like to provide information indicative of state and/or relating to a process, and an output channel that can be utilized to convey a next state to an entity under the control of the controller (eg., an industrial control system).

Returning to FIG. 3, the system 300 may also include the database 315. The database 315 may store one or more function libraries (e.g., the function library 530). A function library. may include a list of functions, including, e.g., a set of operations associated with each function. As one non-limiting example, a function may be a subroutine that performs a set of operations or instructions. In some embodiments, a function library may be associated with a standard programming language. In such embodiments, the set of functions included in the function library may be a set of standard functions of the corresponding programming language. As one non-limiting example, the function library may be associated with a C/C++ programming language. According to this example, the function library may include a set of standard C/C++ functions. Accordingly, in some embodiments, a function library includes a set of pre-existing standard functions (e.g., as a list of pre-existing standard functions). Alternatively or in addition, in some embodiments, a set of functions stored in the function library may be a set of custom (or user-defined) functions. As one non-limiting example, a user may (via the application 460) generate a set of custom add-on functions and store the set of custom add-on functions as a custom function library, such that the custom function library may be implemented by a user program that utilizes at least one custom add-on function. As described in greater detail herein, a user may access and download a corresponding function library (e.g., from the database 315) as part of generating or implementing an add-on function, such that a corresponding function library is provided to (e.g., downloaded to) the industrial device 305 with an add-on function (or a routine associated with the add-on function).

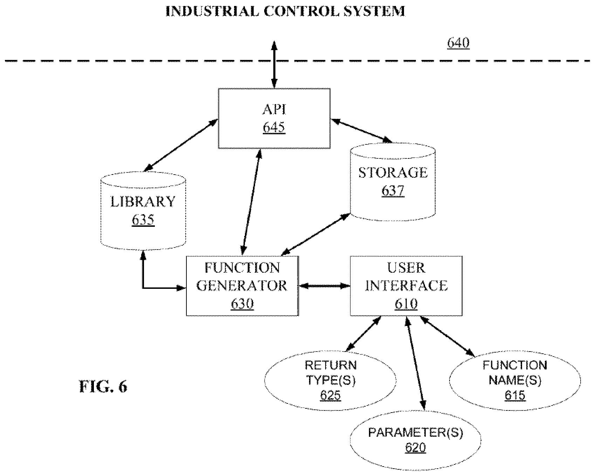

FIG. 6 illustrates an example diagram 600 of facilitating generation of an add-on function and/or other user programs according to some embodiments. In the illustrated example, the diagram 600 includes a user interface 610 that may be generated and provided to a user. In some embodiments, the user interface 610 is generated and provided via the user device electronic processor 400 executing the application 460. The user interface 610 may be, e.g., a graphical user interface ("GUI"), a command line interface, an Application Programming Interface ("API"), an industrial control system environment, or the like. In some embodiments, the user interface 610 is provided to a user via the HMI 415 (e.g., the display device 470) of the user device 310. The user interface 610 can provide a developer with tools for creating and/or editing add-on functions, including associating various function names 615, parameters 620, and/or return types 625. It is to be appreciated that development can be achieved via standard industrial control languages, such as structured text ("ST"), sequential function chart ("SFC"), functional block diagram ("FBD"), instruction list ("IL"), and ladder diagram ("LD"), as well as other languages, such as C, C++, C#, Graphical Motion Language ("GML"), Java, Flow-Charts, etc., and/or any combination thereof. Accordingly, in some embodiments, a user may interact with the user interface 610 to generate one or more custom or user-defined functions.

In one aspect, the developer can invoke a function generator 630 (e.g, as a function or module provided by the application 640) to create a package of one or more add-on functions, where add-functions and/or packages thereof can be generated in essentially any programming language, including industrial control languages like ST, SFC, FBD, IL, and LD and various combinations thereof, which provides flexibility and allows a developer to select a language(s) suited to a particular task(s). In addition, the foregoing provides for modularization and re-use, which can improve programming and user efficiency.

Furthermore, in some embodiments, add-on functions can be assembled as a library 635 (e.g., the function library 530). The library 635 can be created via a markup language (e.g., Extensible Markup Language (XML), Standard Generalized Markup Language (SGML), Hyper Text Markup Language (HTML), and the like), a binary file, an SQL database, and the like, where the controller language appears inside the language as content of a routine. It is to be appreciated that individual add-on functions, a package of more than one add-on function, and/or a library of add-on functions can be encrypted, encoded, password protected, and the like in order to prevent unauthorized users from accessing the functions. In addition, properties associated with such functions and/or libraries can be configured to provide and/or limit read, write, and execute privileges.

Generated add-on functions can be saved in a storage component 637 (e.g., the database 315, the user device memory 405, etc.), assembled as a library in library 635, and/or transferred to an industrial control system 640 (via, e.g, an API 645) (e.g., to the industrial device 305). Additionally, add-functions saved within the storage component 637 and/or saved within the library 635 can be conveyed to the industrial control system 640 via the API 645.

Alternatively, or in addition, the user interface 610 can be utilized by an end-user to generate end-user specific programs that call one or more add-on functions (e.g., one or more add-on functions stored in a function library). Such programs can be generated via industrial control languages such as ST, SFC, FBD, IL, and LD and various combinations thereof, including a language(s) similar and/or different from the language utilized by particular add-on functions called by the program. Generation, storage, modification and/or employment can be achieved utilizing a technique substantially similar to that described above in connection with generating add-on instructions and/or packages thereof. Briefly, the end-user can develop programs via the user interface 610 and the function generator 630, where such programs can call add-on functions in the storage component 637 and/or library 635 In addition, such programs can be stored within the storage component 637 and/or conveyed to the industrial device 305 for execution. Moreover, such programs can be retrieved from the industrial device 305 and modified.

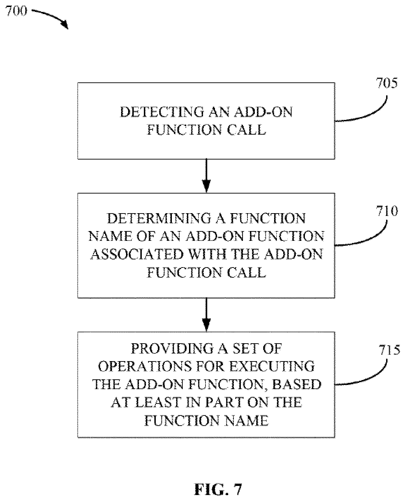

FIG. 7 is a flowchart illustrating an example method 700 for facilitating add-on functions for employment with an industrial device (e.g., the industrial device 305) according to some embodiments. The method 700 is described herein as being performed by the industrial device 305 (e.g., the industrial device electronic processor 500).

As illustrated in FIG. 7, the method 700 includes detecting, with the industrial device electronic processor 500, an add-on function call (at block 705). The add-on function call may be from a user program executing within the industrial device. The industrial device electronic processor 500 may then determine a function name of an add-on function associated with the add-on function call (at block 710). In some embodiments, the add-on function call indicates a function name of an add-on function to be invoked. In response to determining the function name of the add-on function to be invoked, the industrial device electronic processor 500 may then identify a set of operations for the add-on function to be invoked by matching the determined function name to a function name stored in a function library (e.g., the function library 530). The function library 530 may include a set of functions, where each function is identifiable by a function name and associated with a set of operations for executing the corresponding function. Accordingly, the industrial device electronic processor 500 may identify the set of functions for executing the corresponding function by matching the determined function name (associated with the detected add-on function call) to a function name stored in the function library, where the set of functions is linked to the function name stored in the function library that matches the determined function name. As illustrated in FIG. 7, the industrial device electronic processor 500 may then provide the set of operations for executing the add-on function (at block 715). In some embodiments, the industrial device electronic processor 500 may provide the set of operations based at least in part on the function name of the add-on function to be invoked. After providing the set of operations, the set of operations may be executed such that the add-on function called by the add-on function call is invoked (e.g., as part of executing the user program).

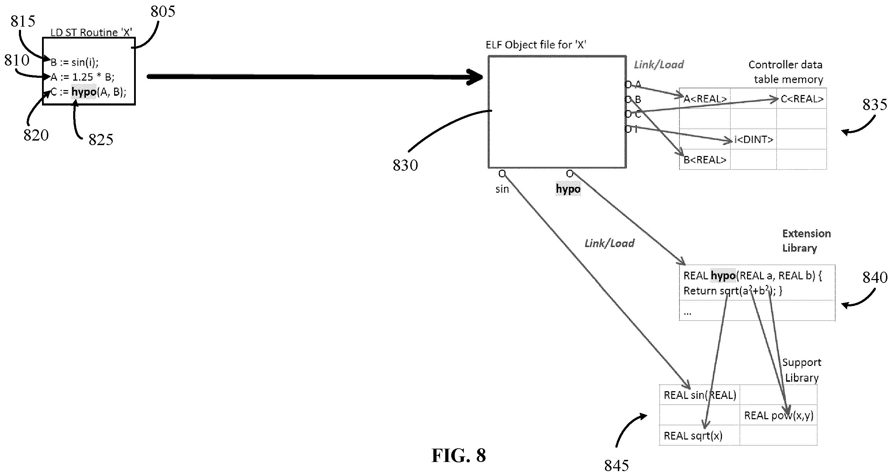

FIG. 8 illustrates an example implementation of add-on functions for employment within an industrial device (e.g., the industrial device 305). As illustrated in FIG. 8, a user may provide a routine 805 (e.g., as a user program or part of a user program). The routine 805 of FIG. 8 is written in ladder and structured text programing languages. In the illustrated example, the routine 805 is called "X".

In some embodiments, to verify the routine 805, each tag used with respect to the routine 805 are declared using predefined data types. Additionally, in some embodiments, each instruction is also predefined. Following the example of FIG. 8, the tags and instructions may be defined as follows:
DINT i; // *transpile inserts toREAL() type conversion for usage with sin(...)* REAL A, B, C;

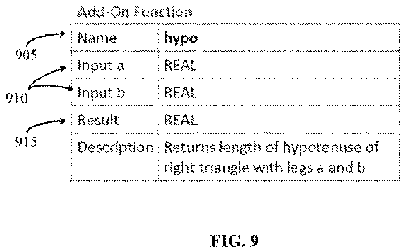

The routine 805 includes three operations: an "A" operation 810, a "B" operation 815, and a "C" operation 820. As illustrated in FIG. 8, the "C" operation 820 includes a reference to an add-on function 825 (entitled "hypo" in FIG. 8). As illustrated in FIG. 9, the add-on function 825 is associated with a function name 905 (e.g., "hypo" in FIG. 9), a set of parameters 910 (e.g., "Input a - REAL" and "Input b - REAL" in FIG. 9), and a result type 915 (e.g., "REAL" in FIG. 9). As illustrated in FIG. 9, the add-on function 825 has a description of: "Returns length of hypotenuse of right triangles with legs a and b." Accordingly, embodiments described herein enable add-on functions to be declared as well. The add-on functions reside in a library (e.g., the function library 530). Additionally, the add-on functions may be declared with extern visibility (e.g., exposed as part of an exposed API of the corresponding industrial device as opposed to being stored in a library) and follow naming rules, such as, e.g., C++ name mangling rules.

Returning to FIG. 8, after the user provides the routine 805 (e.g., via the application 460), the routine 805 may be compiled (or transpiled) into an object file 830. The object file 830 may be an ELF object file, such as, e.g., a relocatable ELF object file. After the object file 830 is generated (or compiled), the object file 830 may be provided to the industrial device 305. In some embodiments, when the object file 830 is provided to the industrial device 305, a function library, such as, e.g., the function library 530 (eg., a function library corresponding to the add-on function) is also provided to the industrial device 305.

As illustrated in FIG. 8, contents of the object file 830 are linked and loaded within the industrial device 305. As one non-limiting example, the parameters (A, B, C, and i) are linked and loaded to a controller data table memory (represented in FIG. 8 by reference numeral 835). As another non-limiting example, the add-on function 825 is linked and loaded with respect to an extension library (e.g., the function library 530) (represented in FIG 8 by reference numeral 840). As another non-limiting example, the sin function is linked and loaded with respect to a support library such as, e.g., a pre-existing function library of the industrial device 305 (represented in FIG. 8 by reference numeral 845).

In some embodiments, the object file 830 may have unresolved references which must be fixed by a linker for the object file 830 to be used while executing the user program. In some embodiments, for the references to be resolved, the linker may find an exact match from the list of data table objects and external functions made available to it. That is, each data table object must be of the same data type as the declaration specifies. This is known as having a common type system shared by the industrial device 305 and a programing environment associated with the industrial device 305 (e.g., a Logix controller and Logix programming environment).

Accordingly, embodiments described herein provide for systems and methods of facilitating add-on functions for employment within industrial devices. In particular, embodiments provide for the implementation of user defined functions configured to execute logic, call a function in an available library, or a combination thereof. As noted above, the implementation of add-on functions provides significant technical improvements over prior approaches. For instance, implementation of add-on functions provide both end-users and developers the ability to leverage add-on functions as a preferred solution. As one non-limiting example, implementation of external add-on functions enable calling of any function (e.g., cbrt, cbrtf-cube root) contained within standard libraries, such as C/C++ libraries (e.g., Redhat newlib) to deliver standardized behavior and save significant time and effort.

External add-on functions further enable calling of internally developed functions (including, e.g., C/C++ functions) created to serve a niche purpose, as corporate building blocks for applications, and the like. Since add-on functions are resource wide assets and may not retain state across calls, add-on functions can be invoked from within any program organization unit ("POU"), such as, e.g., add-on instructions, subroutines, other add-on functions, and the like. Additionally, an end-user can develop an add-on function and generate an external add-on function by compiling the add-on function and installing (or providing) the compiled add-on function within a library, which can be saved and downloaded with a variety of applications. Accordingly, an end-user or developer (e.g., an industrial device developer) may generate libraries of external add-on functions for use by other users (e.g., via a subscription-based service), External add-on functions may be generated from add-on functions similar to how composite instructions are generated (as described in greater detail herein). Finally, add-on functions may be used to override external add-on functions should the latter prove to be anomalous.

What has been described above includes examples of the disclosed technology. It is, of course, not possible to describe every conceivable combination of components or methodologies for purposes of describing the disclosed technology, but one of ordinary skill in the art may recognize that many further combinations and permutations of the disclosed technology are possible. Accordingly, the disclosed technology is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed technology. In this regard, it will also be recognized that the invention includes a system as well as a computer-readable medium having computer-executable instructions for performing the acts and/or events of the various methods of the invention.

In addition, while a particular feature of the disclosed technology may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

**The following is a list of further preferred embodiments of the invention:**
Embodiment 1: A system for facilitating add-on functions for employment with an industrial device, the system comprising:
   an electronic processor configured to detect an add-on function call from a user program executing within the industrial device,
   determine a function name of an add-on function associated with the add-on function call, and
   provide a set of operations for executing the add-on function, based at least in part on the function name of the add-on function.
Embodiment 2: The system of embodiment 1, wherein the add-on function is from a library of add-on functions locally stored on the industrial device.
Embodiment 3: The system of embodiment 2, wherein the library includes a set of pre-existing functions of a programming language.
Embodiment 4: The system of embodiment 3, wherein the programming language is a C programming language or C++ programming language.
Embodiment 5: The system of embodiment 1, wherein the add-on function is a custom function defined by a user.
Embodiment 6: The system of embodiment 1, wherein the electronic processor is further configured to
   receive, from an external storage device, a function library including a set of functions, wherein the set of functions includes the add-on function, and
   store the function library locally on the industrial device.
Embodiment 7: The system of embodiment 1, wherein the electronic processor is further configured to
   prior to detecting the add-on function call,
   receive an object file associated with the add-on function,
   receive a function library associated with the add-on function, and
   store the object file and the function library locally on the industrial device.
Embodiment 8: The system of embodiment 7, wherein the object file is generated based on user input provided in an industrial control language and wherein the function library is associated with a programming language different from the industrial control language.
Embodiment 9: The system of embodiment 1, wherein the set of operations is linked to the function name in a function library stored locally on the industrial device.
Embodiment 10: A method for facilitating add-on functions for employment with an industrial device, the method comprising:
   detecting, with an electronic processor, an add-on function call from a user program executing within the industrial device;
   determining, with the electronic processor, a function name of an add-on function associated with the add-on function call; and
   providing, with the electronic processor, a set of operations for executing the add-on function, based at least in part on the function name of the add-on function.
Embodiment 11: The method of embodiment 10, further comprising:
   accessing a function library of add-on functions locally stored on the industrial device, wherein the add-on function is included in the function library.
Embodiment 12: The method of embodiment 11, wherein accessing the function library includes accessing a function library that includes a set of pre-existing functions of a programming language.
Embodiment 13: The method of embodiment 10, wherein detecting the add-on function call includes detecting an add-on function call for a custom function defined by a user.
Embodiment 14: The method of embodiment 10, further comprising:
   receiving, from an external storage device, a function library including a set of functions, wherein the set of functions includes the add-on function, and
   storing the function library locally on the industrial device.
Embodiment 15: The method of embodiment 10, further comprising:
   executing a routine of the user program, wherein the add-on function call performed as part of the routine, and wherein the set of operations is a subroutine of the routine.
Embodiment 16: The method of embodiment 10, further comprising:
   prior to detecting the add-on function call,
   receiving an object file associated with the add-on function,
   receiving a function library associated with the add-on function, and
   storing the object file and the function library locally on the industrial device.
Embodiment 17: The method of embodiment 16, wherein receiving the object file includes receiving an object file generated based on user input provided in an industrial control language and wherein the function library is associated with a programming language different from the industrial control language.
Embodiment 18: The method of embodiment 10, further comprising:
   identifying the set of operations based on a link between the set of operations and the function name in a function library stored locally on the industrial device.
Embodiment 19: A non-transitory computer-readable medium storing instructions that, when executed by an electronic processor, perform a set of functions, the set of functions comprising:
   detecting an add-on function call from a user program executing within the industrial device;
   determining a function name of an add-on function associated with the add-on function call; and
   providing a set of operations for executing the add-on function, based at least in part on the function name of the add-on function.
Embodiment 20: The set of functions of embodiment 19, wherein the set of functions further includes:
   prior to detecting the add-on function call,
   receiving an object file associated with the add-on function,
   receiving a function library associated with the add-on function, and
   storing the object file and the function library locally on the industrial device.

## Claims

1. A system for facilitating add-on functions for employment with an industrial device, the system comprising:
an electronic processor configured to
detect an add-on function call from a user program executing within the industrial device,
determine a function name of an add-on function associated with the add-on function call, and
provide a set of operations for executing the add-on function, based at least in part on the function name of the add-on function.

2. The system of claim 1, wherein the add-on function is from a library of add-on functions locally stored on the industrial device.

3. The system of claim 2, wherein the library includes a set of pre-existing functions of a programming language; and/or
wherein the programming language is a C programming language or C++ programming language.

4. The system of one of claims 1 to 3, wherein the add-on function is a custom function defined by a user.

5. The system of one of claims 1 to 4, wherein the electronic processor is further configured to
receive, from an external storage device, a function library including a set of functions, wherein the set of functions includes the add-on function, and
store the function library locally on the industrial device.

6. The system of one of claims 1 to 5, wherein the electronic processor is further configured to
prior to detecting the add-on function call,
receive an object file associated with the add-on function,
receive a function library associated with the add-on function, and
store the object file and the function library locally on the industrial device; and/or
wherein the object file is generated based on user input provided in an industrial control language and wherein the function library is associated with a programming language different from the industrial control language.

7. The system of one of claims 1 to 6, wherein the set of operations is linked to the function name in a function library stored locally on the industrial device.

8. A method for facilitating add-on functions for employment with an industrial device, the method comprising:
detecting, with an electronic processor, an add-on function call from a user program executing within the industrial device;
determining, with the electronic processor, a function name of an add-on function associated with the add-on function call; and
providing, with the electronic processor, a set of operations for executing the add-on function, based at least in part on the function name of the add-on function.

9. The method of claim 8, further comprising:
accessing a function library of add-on functions locally stored on the industrial device, wherein the add-on function is included in the function library; and/or
wherein accessing the function library includes accessing a function library that includes a set of pre-existing functions of a programming language.

10. The method of claim 8 or 9, wherein detecting the add-on function call includes detecting an add-on function call for a custom function defined by a user.

11. The method of one of claims 8 to 10, further comprising:
receiving, from an external storage device, a function library including a set of functions, wherein the set of functions includes the add-on function, and
storing the function library locally on the industrial device; or
further comprising:
executing a routine of the user program, wherein the add-on function call performed as part of the routine, and wherein the set of operations is a subroutine of the routine.

12. The method of one of claims 8 to 11, further comprising:
prior to detecting the add-on function call,
receiving an object file associated with the add-on function,
receiving a function library associated with the add-on function, and
storing the object file and the function library locally on the industrial device; and/or
wherein receiving the object file includes receiving an object file generated based on user input provided in an industrial control language and wherein the function library is associated with a programming language different from the industrial control language.

13. The method of one of claims 8 to 12, further comprising:
identifying the set of operations based on a link between the set of operations and the function name in a function library stored locally on the industrial device.

14. A non-transitory computer-readable medium storing instructions that, when executed by an electronic processor, perform a set of functions, the set of functions comprising:
detecting an add-on function call from a user program executing within the industrial device;
determining a function name of an add-on function associated with the add-on function call; and
providing a set of operations for executing the add-on function, based at least in part on the function name of the add-on function.

15. The set of functions of claim 14, wherein the set of functions further includes:
prior to detecting the add-on function call,
receiving an object file associated with the add-on function,
receiving a function library associated with the add-on function, and
storing the object file and the function library locally on the industrial device.
